# EUROPÄISCHE PATENTSCHRIFT

(11) **EP 2 080 073 B1**
(45) Veröffentlichungstag und Bekanntmachung des Hinweises auf die Patenterteilung: **13.04.2011**
(21) Anmeldenummer: 07818936.2
(22) Anmeldetag: 12.10.2007
(51) Int. Cl.: G05B 19/418

(54) **BEDIENUNGSHILFE FÜR EINE VORRICHTUNG ZUM BEHANDELN VON BEHÄLTNISSEN**
MANIPULATION AID FOR A DEVICE FOR MANIPULATING CONTAINERS
ASSISTANCE OPÉRATOIRE POUR UN DISPOSITIF DE TRAITEMENT DE CONTENANTS

(30) Priorität: 24.10.2006 DE 102006049981; 27.10.2006 DE 102006051533
(43) Veröffentlichungstag der Anmeldung: 22.07.2009
(73) Patentinhaber: Krones AG, 93073 Neutraubling (DE)
(72) Erfinder: RAMSAUER, Stefan, 93051 Regensburg (DE); VAN DEN TOL, Peter, 83024 Rosenheim (DE)
(74) Vertreter: Bittner, Bernhard
(86) Internationale Anmeldenummer: PCT/EP2007/008865
(87) Internationale Veröffentlichungsnummer: WO 2008/049518

(56) Entgegenhaltungen:
- WO-A-01/67195
- WO-A-2005/068301
- DE-A1- 19 900 884

## Beschreibung

Die vorliegende Erfindung ist auf eine Vorrichtung zum Behandeln von Behältnissen gerichtet. Insbesondere in der Getränkeherstellungsindustrie kommen unterschiedlichste Vorrichtungen zum Behandeln von Behältnissen vor. Als Beispiele können Etikettiermaschinen, Streckblasmaschinen, Verpackungsmaschinen, welche Behältnisse in Umverpackungen packen, Vorrichtungen zum Herstellen von Umverpackungen und dergleichen genannt werden.

Derartige Maschinen werden üblicherweise in geringen Stückzahlen an Abnehmer geliefert und sind oft individuell auf deren Bedürfnisse zugeschnitten. Die jeweiligen Abnehmer müssen in der Lage sein, die Maschinen sicher zu bedienen und beispielsweise Produktwechsel sicher durchzuführen oder Fehler eigenständig zu beherrschen. Genauer gesagt muss das Bedienpersonal bei der Ausführung bestimmter Tätigkeiten an der Maschine unterstützt werden, um sicher und effizient arbeiten zu können. Aus dem Stand der Technik sind beispielsweise Systeme bekannt, welche ein Fehlverhalten oder Störungen der Maschine oder des Maschinenprozesses erkennen, daraufhin die Maschine anhalten und dem Bedienpersonal anzeigen, dass ein Fehler vorliegt. Dabei ist jedoch oftmals die Suche nach dem Fehler aufwändig und zeitintensiv. Zur eigentlichen Fehlerbehebung steht dem Benutzer meist eine gedruckte Bedienungsanleitung zur Verfügung aus der er entnehmen kann, wie der Fehler zu beheben ist bzw. welche Schritte hierfür zu unternehmen sind.

Auch im Falle eines Produktwechsels, also einer notwendig werdenden Umrüstung der Vorrichtung wird der Bediener üblicherweise auf eine Bedienungsanleitung verwiesen, welche ihm die einzelnen Umrüstschritte erläutert. Dabei ist jedoch nicht von jeder Umstellung von einem ersten Produkttyp A auf einen zweiten Produkttyp B ein Wechsel aller zugrunde liegenden Komponenten nötig, sondern oftmals genügen nur wenige Schritte, um die jeweilige Maschine umzurüsten. In diesem Falle kann es also vorkommen, dass der Benutzer eine Vielzahl von unnötigen Schritten durchführt, da insoweit die Maschine bereits umgestellt ist.

Der vorliegenden Erfindung liegt daher die Aufgabe zugrunde, die Bedienungsfreundlichkeit von Vorrichtungen zum Behandeln von Behältnissen, insbesondere für die Getränkeindustrie, zu vereinfachen. Dabei sollen insbesondere anhand einer Testumgebung die verschiedenen Komponenten und Möglichkeiten für die Verbesserung der Selbstbeschreibungsfähigkeit der jeweiligen Maschine verbessert werden. Hierbei soll die Bedienungsfreundlichkeit im Hinblick auf durchzuführende Produktwechsel, im Hinblick auf Fehlervisualisierung und Fehlerbehebung sowie im Hinblick auf Wartung verbessert werden.

WO 2005/068301 A1 zeigt eine Vorrichtung gemäß dem Oberbegriff des Anspruchs 1.

DE 199 00 884 A1 offenbart ein System und Verfahren zum Bedienen und Beobachten eines Automatisierungssystems mit Prozessvisualisierung und Prozesssteuerung durch virtuelle Anlagenmodelle als Abbild einer realen Anlage.

Dies wird erfindungsgemäß durch eine Vorrichtung nach Anspruch 1, eine Überwachungseinheit nach Anspruch 7 und ein Verfahren nach Anspruch 9 erreicht. Vorteilhafte Ausführungsformen und Weiterbildungen sind Gegenstand der Unteransprüche.

Die erfindungsgemäße Vorrichtung zum Behandeln von Behältnissen weist eine Behandlungseinheit auf, welche die Behältnisse in einer vorbestimmten Weise behandelt. Dabei weist diese Behandlungseinheit wenigstens eine Zustandserfassungseinrichtung auf, die wenigstens einen Betriebszustand der Vorrichtung erfasst und die Zustandssignale ausgibt, die für diesen Betriebszustand der Behandlungseinheit charakteristisch sind. Weiterhin ist eine Überwachungseinheit zum Steuern oder Bedienen der Behandlungseinheit vorgesehen, wobei die Überwachungseinheit eine Speichereinrichtung aufweist, in der Darstellungsdaten für Komponenten der Behandlungseinheit und/oder der Vorrichtung abgelegt sind. Erfindungsgemäß weist die Überwachungseinheit eine Bildmanipulationseinheit, die in Reaktion auf ausgegebene Zustandssignale Bildsequenzen auf Grundlage von in der Speichereinrichtung abgelegten Darstellungsdaten bereitstellt, und eine visuelle Anzeigeeinrichtung zur Anzeige der bereitgestellten Bildsequenzen auf. Hierbei ist die Anzeigeeinrichtung derart ausgestaltet, dass sie, im Falle eines Fehlers an einer Komponente der Behandlungseinheit, als Bildsequenzen, diese Komponenten und Schritte anzeigt, die zur Behebung des Fehlers notwendig sind.

Bei den Behältnissen kann es sich insbesondere, aber nicht ausschließlich, um Flaschen, Behälter, Kisten und dergleichen handeln. Unter einer Behandlungseinheit wird jede Einheit verstanden, welche in einer bestimmten Weise auf die Behältnisse einwirkt, beispielsweise eine Vorrichtung zum Etikettieren der Behältnisse, eine Vorrichtung zum Befüllen der Behältnisse, eine Vorrichtung zum Herstellen, insbesondere Streckblasen der Behältnisse, eine Vorrichtung zum Verpacken von Behältnissen und dergleichen.

Unter einem Betriebszustand der Vorrichtung werden einerseits Störzustände der Vorrichtung verstanden, beispielsweise Überhitzungen, zu hohe Drücke und dergleichen. Daneben werden jedoch unter einem Betriebszustand auch bestimmte Istzustände der Maschine verstanden, beispielsweise die Besetzung einer Neckhandlingsklammer mit einem Gefäß oder ein fehlerhaft liegendes Gefäß. Daneben können die Betriebszustände auch Istpositionen der Maschine sein, beispielsweise Istpositionen einer Förderschnecke, eines Transportbandes, eines Greifsterns oder dergleichen, die einer bestimmten Sorte von Behältnissen entsprechen, oder der Betriebsdauer oder des Verschleisszustands eines Antriebselements.

Entsprechend kann es sich bei einer Zustandserfassungseinrichtung um eine Einrichtung handeln, die beispielsweise eine zu hohe Betriebstemperatur oder zu hohe Betriebsdrücke oder ausgetretene Flüssigkeiten detektiert. Daneben kann es sich bei der Zustandserfassungseinrichtung auch um eine Einrichtung handeln, die beispielsweise einen Öffnungszustand einer Tür, einer Sicherheitsabdeckung oder dergleichen erfasst. Daneben kann es sich bei der Zustandserfassungseinrichtung auch um eine Einrichtung handeln, die eine momentane Betriebsposition der Vorrichtung oder eines Bestandteils der Vorrichtung, beispielsweise eine Drehstellung einer Förderschnecke, oder die Betriebsdauer der Vorrichtung bzw. die Anzahl der behandelten Behältnisse erfasst.

Unter einer Überwachungseinheit wird jede Einheit verstanden, die mit der Vorrichtung zum Behandeln von Behältnissen kommuniziert und eine Überwachung wenigstens eines Betriebszustandes der Vorrichtung erlaubt. Daneben ist besonders bevorzugt diese Überwachungseinheit auch als Überwachungseinheit zum Steuern und / oder Bedienen der Behandlungseinheit ausgeführt. Vorzugsweise erfolgt die Überwachung auch auf Grundlage der von der Zustandserfassungseinrichtung ausgegebenen Zustandssignale.

Unter Darstellungsdaten werden jegliche Daten verstanden, welche die betreffenden Komponenten der Behandlungseinheit, die Behandlungseinheit, die Komponenten der Vorrichtung, sowie die Vorrichtung beschreiben. Dabei handelt es sich insbesondere um Bilddaten, die eine graphische Anzeige der jeweiligen Komponente auf der Anzeigeeinrichtung erlauben. Unter einer Bildmanipulationseinheit wird eine Einrichtung verstanden, welche das auf Grundlage der Darstellungsdaten angezeigte Bild verändern kann und beispielsweise eine Drehung des Bildes im 3D-Format, ein Zoomen in gewisse Bereiche und dergleichen erlaubt. Diese Bildmanipulationseinheit erstellt bevorzugt auf Grundlage der in der Speichereinrichtung abgelegten Darstellungs- und Ablaufdaten Bildsequenzen, um es dem Benutzer beispielsweise zu ermöglichen, ein dargestelltes Objekt von mehreren Seiten zu beobachten bzw. räumlich zu drehen. Daneben kann die Bildmanipulationseinheit auch auf Grundlage eines Bildes Bildsequenzen erzeugen, die dem Benutzer Ablaufanweisungen ausgeben, wie beispielsweise ein Fehler zu beheben ist.

Daneben kann die Bildmanipulationseinheit auch Anweisungen für etwaige Produktwechsel erzeugen, oder Bewegungsabläufe der Maschine in animierter Form darstellen.

Die genannten Maßnahmen erhöhen die Selbstbeschreibungsfähigkeit und Prozesssicherheit der jeweiligen Maschine und senken damit auch den Schulungsaufwand für die erfindungsgemäßen Maschinen und Anlagen. Daneben wird auch der maschinenspezifische Einlernaufwand erheblich reduziert und eine intuitive Bedienbarkeit auch durch weniger geschultes Personal ermöglicht.

Vorzugsweise sind die Darstellungsdaten in Form von Vektorgraphiken in der Speichereinrichtung abgelegt. Eine Vektorgraphik ist ein zwei- oder dreidimensionales Computerbild, das aus graphischen Primitiven wie Linien, Kreisen und Polygonen zusammengesetzt ist. Dabei können derartige Vektorgraphiken im Gegensatz zu Rastergraphiken ohne Qualitätsverlust stufenlos skaliert und verzerrt werden, etwa mittels homogener Koordinaten. Prinzipiell wäre es auch möglich, in der Speichereinrichtung die jeweiligen Graphiken in Form von Bildern (wie Bitmaps) oder Filmen abzuspeichern. In diesem Falle wäre jedoch der Speicheraufwand für die Speichereinrichtung sehr hoch. Durch die Verwendung von Vektorgraphiken kann der Speicheraufwand erheblich reduziert werden. Auch ist es auf Grundlage von Vektorgraphiken mit weitaus geringerem Speicheraufwand möglich, Bildsequenzen zu erzeugen. So ist es beispielsweise möglich, im Falle eines Fehlers an einer Komponente diese Komponente anzuzeigen und auch die Schritte anzuzeigen, die zur Behebung des Fehlers notwendig sind.

Bevorzugt sind in der Speichereinrichtung Bilder einzelner Komponenten der Maschinen, der Vorrichtung, der Umgebung etc. in vereinfachter Form abgelegt. Dabei wird bevorzugt bei der Erstellung dieser Bilddaten von einem 3-D Vollmodell ausgegangen. Dieses Modell beinhaltet eine geometrisch exakte Bauteilabbildung und kann beispielsweise aus CAD-Unterlagen gewonnen werden. Dieses Vollmodell benötigt jedoch sehr hohe Speicherkapazitäten und ist daher in der Handhabung nicht praktikabel. Auch wird der Benutzer der Maschine aufgrund der oft hohen Detaildichte durch ein derartiges Vollmodell verwirrt. Daher werden bevorzugt die Bilder der Komponenten in vereinfachter Form abgelegt, wobei beispielsweise auf für den Benutzer irrelevante Teilbereiche des jeweiligen Bauteils verzichtet wird. Auf diese Weise kann eine Speicherplatzreduktion um bis zu bzw. mehr als 99 % stattfinden. Daher ist es auch möglich, die jeweilige Überwachungseinheit mit relativ geringen Speicherressourcen auszustatten und es ist insbesondere nicht nötig, aufwändige Speichermedien wie beispielsweise CD-Rom-Laufwerke zur Verfügung zu stellen.

Auch kann auf Grundlage der vereinfachten Bilddaten durch die Bildmanipulationseinrichtung einfach eine Sequenz bzw. ein Bewegungsablauf erstellt bzw. angegeben werden.

Vorzugsweise sind in der Speichereinrichtung Bildsequenzen abgelegt. So ist es möglich, auf Grundlage eines vorgegebenen Zustandssignals eine bestimmte Bildsequenz auszuwählen und diese über die Anzeigevorrichtung auszugeben.

Besonders bevorzugt sind in der Speichereinrichtung Ablaufdaten abgelegt. Mit diesen Ablaufdaten, also quasi dem "Drehbuch", ist es der Bildmanipulationseinheit möglich, auf Grundlage eines vorgegebenen Zustandssignals und der in der Speichereinrichtung abgelegten Darstellungsdaten eine bestimmte Bildsequenz zu erzeugen und diese über die Anzeigevorrichtung auszugeben. Auf diese Art braucht in der Speichereinrichtung nicht für jeden denkbaren Zustand der Vorrichtung eine Bildsequenz hinterlegt sein, sondern nur ein Ablaufprogramm, also das "Drehbuch". Die gezeigte Bildsequenz wird bei jedem Aufruf erneut von der Bildmanipulationseinheit erzeugt. So wird der Speicherbedarf der Speichereinrichtung enorm reduziert.

Bei einer weiteren vorteilhaften Ausführungsform ist eine Vielzahl von Zustandserfassungseinrichtungen vorgesehen. Diese sind vorzugsweise aus einer Gruppe ausgewählt, welche Temperatursensoren, Schalter, Drucksensoren, Sensoren zur Bestimmung der Position oder der Art von Bauteilen wie Wellen oder Motoren, Sensoren zur Bestimmung eines Belegungszustandes einer Komponente und dergleichen enthält.

Die Betriebszustände sind, wie oben erwähnt, aus einer Gruppe von Betriebszuständen ausgewählt, welche Störungszustände, Produktwechselzustände, Störungszustände der Zustandserfassungseinrichtungen, Istzustände, Sollzustände und dergleichen enthält.

Bei einer weiteren bevorzugten Ausführungsform sind in einer Speichereinrichtung Betriebszustände der Behandlungseinheit gespeichert. So kann beispielsweise gespeichert sein, wie bei einem bestimmten Produkt die einzelnen Komponenten der Behandlungseinheit eingestellt sind. Erfolgt nun ein Wechsel auf ein weiteres Produkt, so ist es möglicherweise nicht erforderlich, sämtliche Zustände zu ändern, sondern einige der Betriebszustände können beibehalten werden. An den Benutzer werden dann lediglich diejenigen Zustände ausgegeben, die geändert werden müssen bzw. es werden lediglich diejenigen Schritte an den Benutzer ausgegeben, die für den jeweils durchzuführenden Produktwechsel von einem Produkt A auf ein Produkt B durchzuführen sind.

Die vorliegende Erfindung ist weiterhin auf eine Überwachungseinheit insbesondere zum Steuern und/oder Bedienen einer Vorrichtung der oben beschriebenen Art gerichtet. Dabei weist die Überwachungseinheit eine Speichereinrichtung auf, in der Darstellungsdaten für Komponenten einer Behandlungseinheit und/oder der Vorrichtung abgelegt sind. Erfindungsgemäß weist die Überwachungseinheit eine Bildmanipulationseinheit, die auf Grundlage von in der Speichereinrichtung abgelegten Darstellungsdaten Bildsequenzen erzeugt, und eine visuelle Anzeigeeinrichtung zur Anzeige der bereitgestellten Bildsequenzen auf. Hierbei ist die Anzeigeeinrichtung derart ausgestaltet, dass sie, im Falle eines Fehlers an einer Komponente der Behandlungseinheit, als Bildsequenzen, diese Komponenten und Schritte anzeigt, die zur Behebung des Fehlers notwendig sind. In diesem Falle kann die erfindungsgemäße Überwachungseinheit auch ohne direkten Kontakt oder ohne Verbindung mit der zu steuernden Maschine, also offline, verwendet werden. Dabei kann die Überwachungseinheit ebenfalls eine Bedienhilfe für den Benutzer darstellen und ihm beispielsweise relevante Daten für die jeweils anzuschließende Maschine liefern. So kann beispielsweise der Benutzer bestimmte Komponenten der Maschine auswählen und sich durch Bildsequenzen Informationen über diese Bauteile verschaffen, beispielsweise über deren Einbau, über deren Spezifizierungen, Wartung und dergleichen.

Vorzugsweise sind die Bildsequenzen auf Grundlage eines Istzustands der Vorrichtung ausgebbar. In diesem Falle besteht besonders bevorzugt eine Kommunikationsverbindung zwischen der Maschine und der Überwachungseinheit, wobei beispielsweise aufgrund von Motorstellungen, Sensorsignalen und dergleichen der Istzustand der Maschine ermittelt wird und an die Überwachungseinheit ausgegeben wird. Vorzugsweise ist die Überwachungseinheit in der oben beschriebenen Art ausgebildet und insbesondere sind die Darstellungsdaten in Form von Vektorgraphiken in der Speichereinrichtung abgelegt.

Die vorliegende Erfindung ist weiterhin auf ein Verfahren zum Betreiben einer Vorrichtung zum Behandeln von Behältnissen gerichtet. Dabei wird in einem ersten Schritt bevorzugt von der Vorrichtung zum Behandeln von Behältnissen ein charakteristisches Signal an eine Überwachungseinheit der Vorrichtung ausgegeben. Das charakteristische Signal kann jedoch auch von einem Benutzer veranlasst werden. Letzterer Fall kann z.B. bei einem Produktwechsel eintreten, bei dem der Benutzer eine Quittierung eines bereits durchgeführten Vorgangs vornimmt. In einem weiteren Schritt wird ein vorgegebener Darstellungsdatensatz oder mehrere vorgegebene Darstellungsdatensätze aus einer Vielzahl von in einer Speichereinrichtung abgelegten Darstellungsdatensätzen ausgewählt, wobei der Datensatz bzw. die Datensätze für wenigstens eine Komponente und/oder die Vorrichtung charakteristisch sind und die Auswahl in Reaktion auf das charakteristische Signal erfolgt. Schließlich wird eine Bildsequenz in Reaktion auf das charakteristische Signal und auf Grundlage des ausgewählten Darstellungssatzes bzw. der ausgewählten Darstellungsdatensätze erzeugt und /oder ausgegeben. Hierbei werden, im Falle eines Fehlers an einer Komponente der Behandlungseinheit, als die Bildsequenz diese Komponenten und Schritte angezeigt, die zur Behebung des Fehlers notwendig sind. Dabei ist es auch möglich, dass die Bildsequenz erst in Reaktion auf eine zusätzliche Eingabe durch den Benutzer erfolgt, beispielsweise auf eine Eingabe hin, ein bestimmtes Bild zu drehen oder heranzuzoomen. Unter einer Bildsequenz werden daher einzelne Bilder verstanden, die in Abfolge übertragen werden und beispielsweise ein Bauteil aus unterschiedlichen Perspektiven zeigen. Die Sequenz kann jedoch auch eine Anweisung an den Benutzer sein.

Vorzugsweise ist das charakteristische Signal ein für einen Betriebszustand der Vorrichtung charakteristisches Signal, d. h. insbesondere ein Signal, welches für einen Bewegungs- oder Fehlerzustand der Vorrichtung charakteristisch ist.

Vorzugsweise wird die Bildsequenz in einer 3D-Darstellung ausgegeben. Dies bedeutet, dass die Anzeigevorrichtung die jeweiligen Bauteile in dreidimensionaler Form anzeigt und insbesondere auch eine Drehung der Bauteile in dreidimensionaler Form ermöglicht.

Bei einem weiteren bevorzugten Verfahren werden an einen Benutzer Anweisungen zur Erreichung eines Sollzustandes der Vorrichtung in Form von Bildsequenzen ausgegeben. Dabei kann beispielsweise von einem Istzustand bzw. einem Fehlerzustand der Maschine ausgegangen werden, wobei in Form von Bildsequenzen angezeigt wird, welche Schritte im Einzelnen zur Behebung des Fehlers nötig sind. Besonders bevorzugt wird dabei auf Textinformationen verzichtet, um eine aufwändige Übersetzung verschiedener Anweisungen in andere Sprachen zu vermeiden. Auch im Falle eines Produktwechsels bzw. einer Umrüstung oder eines Wartungsvorgangs können durch die erwähnten Bildsequenzen Anweisungen an einen Benutzer ausgegeben werden, beispielsweise die Anweisungen "Öffnen einer Sicherungstüre", "Entnehmen eines Produkts", "Einsetzen eines Formatteils", "Austausch eines Filters", "Nachfüllen eines Schmiermittels", "Wechseln einer Lagerbuchse" o. dgl.

Vorzugsweise werden die Anweisungen auf Grundlage eines Istzustandes der Vorrichtung ausgegeben. Damit kann beispielsweise im Falle eines Produktwechsels dem Benutzer gezeigt werden, welche Schritte tatsächlich durchzuführen sind, um den Produktwechsel zu erreichen.

In einem weiteren bevorzugten Verfahren werden bereits ausgeführte Anweisungen abgespeichert. Damit ist eine sichere Kontrolle möglich, in welchem Stadium eines Produktwechsels oder einer Fehlerbehebung sich der Benutzer befindet. Zusätzlich können an den Benutzer auch Textinformationen ausgegeben werden. Daneben ist es auch möglich, im Falle beispielsweise von Fehlerzuständen, akustische Signale auszugeben oder die jeweilige Maschine anzuhalten.

Weitere Vorteile uns Ausführungsformen ergeben sich aus den beigefügten Zeichnungen:

Darin zeigen:
- Fig. 1: ein Blockdiagramm einer erfindungsgemäßen Vorrichtung;
- Fig. 2a- 2c: eine Darstellung zur Erläuterung der Bildspeicherung;
- Fig. 3: eine Darstellung zur Veranschaulichung der Vorgehensweise im Falle eines Produktwechsels; und
- Fig. 4: eine Darstellung zur Veranschaulichung der Vorgehensweise im Falle einer Fehlerbehebung

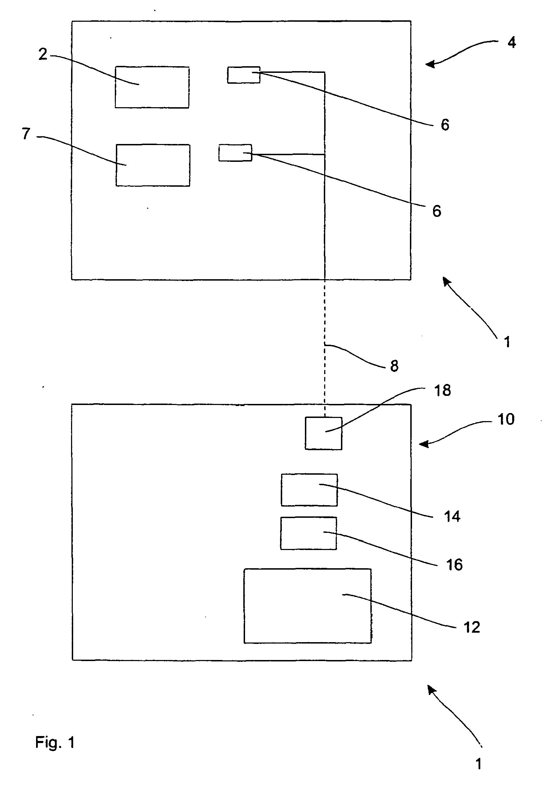

Fig. 1 zeigt ein Blockdiagramm einer erfindungsgemäßen Vorrichtung 1 zum Behandeln von Behältnissen. Diese Vorrichtung 1 weist eine Behandlungseinheit 4 zum Behandeln von Behältnissen auf. Bei dieser Behandlungseinheit kann es sich beispielsweise um eine Etikettiermaschine handeln. Die Behandlungseinheit weist dabei eine Vielzahl von einzelnen Bauteilen bzw. Komponenten auf, wobei jedoch nur zwei Komponenten 2, 7 dargestellt sind. Eine Komponente kann z.B. auch ein nicht direkt mit der Maschine wirkverbundenes Teil, wie z.B. ein Rüstteilwagen mit Ersatzteilen sein. Diesen beiden Komponenten ist jeweils eine Zustandserfassungseinrichtung 6 zugeordnet, die einem Betriebszustand der Komponente bzw. auch der Behandlungseinheit 4 insgesamt erfasst.

Die Zustandserfassungseinrichtungen 6 geben über eine Kommunikationsverbindung 8 Signale an eine Überwachungseinheit 10 aus, wobei diese Signale zu entsprechenden Betriebszuständen der Behandlungseinheit 4 bzw. der Komponenten 2,7 korrespondieren. Bei der Kommunikationsverbindung 8 kann es sich um eine Kabelverbindung, aber auch um drahtlose Verbindungen, wie beispielsweise Funkverbindungen, Infrarotverbindungen oder dergleichen handeln. Damit ist es möglich, die Überwachungseinheit auch in einem bezüglich der Behandlungseinheit 4 getrennten Raum oder auch an weiter entfernten Orten unterzubringen. Die Überwachungseinheit 10 ist hier als "Touch Panel" ausgestattet oder weist ein oder mehrere "Touch Panels" auf.

Die Überwachungseinheit 10 weist eine Anzeigeeinrichtung 12 auf, die eine Visualisierung der Maschinen und / oder Anlagen bzw. einzelner Bauteile wie der Komponenten 2, 7 erlaubt. Über die Kommunikationsverbindung 8 stehen damit der Überwachungseinheit 10 aktuelle Daten, beispielsweise eines Umrüstvorgangs oder eines Betriebszustandes der Behandlungseinheit 4 zur Verfügung. Die Signale werden von einer Empfangseinrichtung 18 der Überwachungseinheit 10 aufgenommen. Anhand dieser Daten können an einen Benutzer Instruktionen ausgegeben werden. Dabei werden dem Benutzer die aktuell hinterlegten Daten aus der Visualisierung, beispielsweise aktuelle Betriebszustände der Behandlungseinheit 4 sowie die tatsächlich benötigten Arbeitsschritte (in Form einer hinterlegten Produktlogik) angezeigt. Dies ermöglicht ein effizientes Arbeiten und vermeidet unnötige Schritte, beispielsweise bei einem Produktwechselvorgang. Bereits erledigte Schritte werden an ein übergeordnetes System (z. B. ERP, MES) weitergereicht und abgespeichert.

In einer Speichereinrichtung 14 sind die Darstellungsdaten für die beiden Komponenten 2 und 7 und für weitere Komponenten der Behandlungseinheit 4 sowie für nicht direkt mit der Behandlungseinheit 4 verbundene Komponenten abgespeichert. Weiterhin befinden sich auf der Speichereinrichtung Ablaufdaten, also eine Art "Drehbuch" über die Folge von anzuzeigenden Bildern oder Positionen von Bildern. Eine Bildmanipulationseinheit 16 kann auf diese gespeicherten Daten zurückgreifen und aufgrund der gespeicherten Darstellungsdaten sowie der Ablaufdaten Bilder oder Bildsequenzen erzeugen. Diese Bildsequenzen werden anschließend auf der Anzeigeeinrichtung 12 ausgegeben. Die Bildsequenzen können jedoch auch bereits in der Speichereinrichtung abgelegt sein und bei Bedarf abgerufen werden.

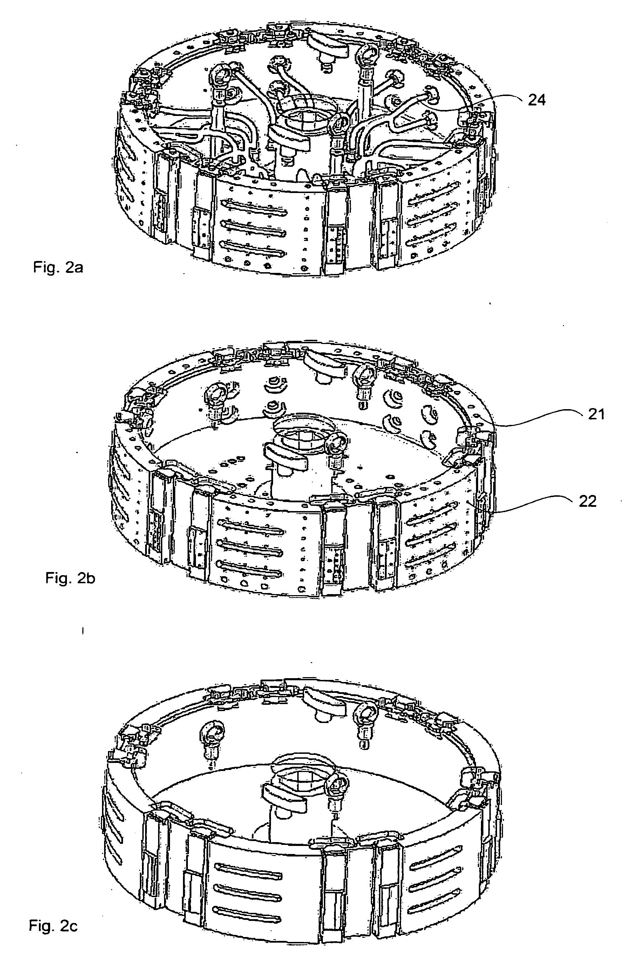

In den Figuren 2a - 2c wird veranschaulicht, wie die einzelnen Darstellungsdaten in der Speichereinrichtung abgelegt sind. Um Speicherkapazitäten einzusparen, werden in der Speichereinrichtung 14 die Darstellungsdaten in Form eines VRML-Modells abgelegt. Bei VRML (virtuell reality modelling language) handelt es sich um eine Beschreibungssprache für 3D-Szenen, deren Geometrien, Ausleuchtungen, Animationen und Interaktionsmöglichkeiten.

Eine derartige VRML-Darstellung kann von einem PC des Betrachters in Echtzeit generiert werden. Dies bedeutet, dass der PC jedes einzelne Bild aus den vorhandenen Geometriedaten, sowie dem Verhalten und den Bewegungen ständig neu berechnen kann. Durch die jeweils hinterlegten VRML-Modelle sind damit auch 3D-Darstellungen kompletter Objekte möglich. Dem gegenüber zeigt Bild 2a ein so genanntes Vollmodell mit geometrisch exakten Bauteilabbildungen, einer konstruktiven Auslegung der Bauteile und genau dargestellten Geometrien.

Das in Fig. 2c gezeigte VRML-Modell zeigt eine dreidimensionale Darstellung dieses in Fig. 2a gezeigten Objekts mit reduzieren Geometrien. Dieses Model erlaubt gleichwohl eine Vermittlung konkreter Inhalte bzw. Funktionalitäten des angezeigten Bauteils, wobei es sich hier um ein Bauteil aus einer Etikettiermaschine handelt. Daneben können über das VRML-Modell ein Anlagenlayout oder Montagevorgänge vermittelt werden. Das Modell erlaubt daneben eine einfache Interaktion bzw. Navigation, und schließlich ist auch ein prozessübergreifender Einsatz möglich.

Damit dient das in Fig. 2c gezeigte Objekt bzw. dessen Daten als Kommunikationshilfsmittel. Im Einzelnen werden ausgehend von dem in Fig. 2a gezeigten Vollmodell zunächst einzelne Teile, die für den Benutzer weniger relevant sind, ausgeblendet. Genauer gesagt wird für eine Darstellung der Maschine der Detailgehalt der 3D-Geometrie reduziert. Dazu werden vor allem Normteile wie z.B. Schrauben, Unterlegscheiben, die Schläuche 24 und auch von außen nicht sichtbare und für den Umrüstvorgang oder die Fehlerbehebung nicht notwendige Konstruktionsdetails aus dem Modell gelöscht. Die Umsetzung dieser Schritte wird in dem verwendeten 3D-CAD-System durchgeführt, da hier entsprechende Funktionalitäten zur Verfügung stehen. Daneben kann durch das Löschen dieser Details auch der Schutz an firmeneigenen Knowhow sichergestellt werden.

Das Ziel dieses Arbeitsschrittes ist die Erzeugung eines für die Darstellung der geforderten Funktionalität vollständigen, aber gleichzeitig auch handhabbaren 3D-Modells der Maschine. Auf diese Weise kann bereits eine Reduzierung der Datengröße erreicht werden. In dem zweiten Übergang von Fig. 2b zu Fig. 2c werden, wie oben erwähnt, die Geometrien vereinfacht und damit wird in Fig. 2c das Gebilde als vereinfachtes Simulationsmodell ausgegeben. So kann beispielsweise auf die Darstellungen der Bohrungen 21 am oberen Rand oder auch die Öffnungen 22 bei der Erstellung des Simulationsmodells verzichtet werden. Genauer werden die aufbereiteten Daten in dem weiteren Schritt aus der 3D-CAD konvertiert. Die transportierten Daten werden in die VR-Software importiert und bezüglich dem äußeren Erscheinungsbild überarbeitet. Hierzu sind die Farben oder Texturen der verschiedenen Bauteile, und deren Beleuchtung zu bestimmen. Auch ist das Erstellen der Animationen möglich.

Durch die in den Fig. 2a - 2c gezeigte Vorgehensweise kann der Speicherplatz, der für die jeweiligen Modelle benötigt wird, um bis zu 99% und mehr reduziert werden.

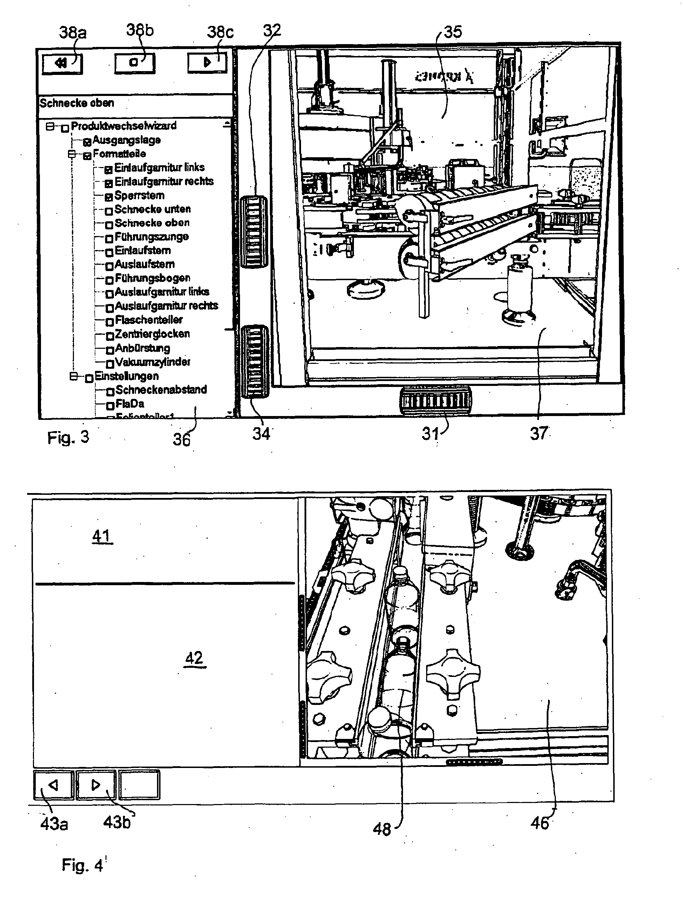

Fig. 3 zeigt die Anzeigevorrichtung 12 bzw. deren Bildschirmdarstellung im Falle eines Produktwechsels. Dabei wird in dem rechten Teilbild 35 bzw. dem Hauptfenster 35 ein bestimmter Maschinenteil bzw. ein Bauteil gezeigt, an dem beispielsweise ein Produktwechsel vorgenommen werden soll. Damit soll visualisiert werden, wie eine Maschine von einem Produkt (z. B. 0,51 Flasche) auf ein anderes Produkt (z.B. 1,01 Flasche) umgestellt werden muss. Diese Visualisierung im Hauptfenster 35 dient dem Benutzer als interaktive Anleitung und zeigt alle benötigten Schritte eines Produktwechsels an Hand von animierten 3D-Modellen und Symbolen auf.

Vorzugsweise wird dabei auf Text verzichtet, sodass Übersetzungen hinfällig werden und es keine Rolle spielt, welche Sprachen der jeweilige Benutzer beherrscht. Idealer Weise sollten jeweils nur die notwendigen Schritte instruiert werden. Vorzugsweise können Daten eingeblendet werden, die an bestimmten Stellen eingestellt werden müssen (Soll-Wert). So sind bei Produktwechseln häufig Abstände oder Höhen mittels Spindeln einzustellen. An bzw. bei den Spindeln können die aktuellen Werte vorgesehen werden, um dem Benutzer eine Hilfestellung für die Umstellung zu geben. Es können aber auch die Istwerte bestimmter Komponenten eingeblendet werden.

Besonders bevorzugt ist die Animation auf der Überwachungseinheit 10 bzw. deren Visualisierungssystem implementiert. Daneben ist dieses Visualisierungssystem auch mit der Maschinensteuerung verknüpft. Diese Implementierung wird dadurch ermöglicht, dass die Datenmengen für die jeweils anzuzeigenden Animationen gering gehalten werden.

Im Einzelnen können die Informationen damit vor Ort an der Maschine abrufbar sein. Die Animationen können jedoch auch als Schulungsunterlagen verwendet und beispielsweise auf Windows-Rechnern im Stand-alone-Betrieb d. h. unabhängig von der Behandlungseinheit genutzt werden.

Bei der in Fig. 3 gezeigten Ausführungsform weist die Anzeigeeinrichtung zwei Betätigungseinrichtungen 31 und 32 auf, mit denen das gezeigte Bild 37 um zwei Achsen bzw. die x- und die y-Achse gedreht und damit dreidimensional von unterschiedlichen Seiten betrachtet werden kann. Bei diesen Betätigungseinrichtungen kann es sich um tatsächlich vorhandene Schalter oder auch um die graphische Darstellung implementierter Betätigungseinrichtungen handeln, wobei diese Betätigungseinrichtungen durch Berührung der Anzeigeeinrichtung 12 aktiviert werden.

Genauer gesagt löst eine Betätigung der Betätigungseinrichtungen 31 und 32 den Ablauf von Bildsequenzen aus.

Eine weitere Betätigungseinrichtung 34 erlaubt eine Vergrößerung bzw. Verkleinerung des in dem Hauptfenster 35 dargestellten Bildes. Dabei ist es möglich, dass das in dem Hauptfenster 35 dargestellte Bild animiert den tatsächlichen momentanen Lauf der Behandlungseinheit 4 wiedergibt. Dabei kann beispielsweise aufgrund von Steuerungsdaten aus der Behandlungseinheit das jeweils darzustellende Bild erzeugt werden, beispielsweise aus einer bestimmten Motorstellung auf eine Stellung einer durch diesen Motor und / oder Sensorsignalen angetriebenen Einheit geschlossen werden und ein entsprechend animiertes Bild dargestellt werden.

Auch ist es möglich in der animierten Darstellung hinter bestimmten Bauteilen zu sehen bzw. diese abzunehmen.

Damit ist eine tatsächliche Überwachung eines Ablaufs der Behandlungseinheit möglich. In dem linken Nebenfenster 36 kann beispielsweise über Textinformationen eine Anleitung für einen Produktwechsel vorgenommen werden. Dabei ist dem System ein Istzustand bzw. eine Ausgangslage bekannt. In dem Nebenfenster 36 ist eine Vielzahl von Bauteilen angegeben, die für einen bestimmten Produktwechsel erforderlich ist. Das in dem Hauptfenster 37 angezeigte Bild und das in dem Nebenfenster 36 angezeigte Bild korrespondieren zueinander. So ist es beispielsweise möglich, dass, wie in Fig. 3 gezeigt, bereits drei Bauteile gewechselt bzw. angepasst wurden und dies entsprechend in dem Nebenfenster 36 gekennzeichnet ist. Sobald der Benutzer an der realen Maschine Änderungen an der unteren Transportschnecke vorgenommen hat und diese Änderungen auch als korrekt anerkannt werden, wird auch dieser Schritt in dem Nebenfenster 36 als abgearbeitet gekennzeichnet. Damit kann dem Benutzer mit dieser Darstellung eine leicht verständliche Anleitung für das Auswechseln von bestimmten Bauteilen gegeben werden. Da ein Istzustand der Maschine abgespeichert ist und dem System bekannt ist, welcher Sollzustand bei einem bestimmten Produktwechsel erreicht werden soll, kann dem Benutzer auch angezeigt werden an, welchen Bauteil für einen bestimmten Wechsel keine Änderungen notwendig sind.

Mithilfe der Betätigungsfelder 38a, 38b, 38c kann eine Simulation in dem Hauptfenster 37 angehalten (Betätigungsfeld 38b) rückwärts abgespielt (Betätigungsfeld 38a) oder weiter abgespielt (Betätigungsfeld 38c) werden.

Fig. 4 zeigt ein weiteres Beispiel für eine Anzeige in der Anzeigevorrichtung 12 im Falle des Auftretens von Fehlern. Dabei werden in einem Kommunikationsfenster 41 bestimmte Fehlermeldungen ausgegeben, beispielsweise wird gemeldet, dass ein Maschinenfehler in der Einlaufkontrolle vorliegt (Fehlerlokalisierung). Daneben kann auch der genaue Ort des Fehlers wie beispielsweise der Einlauf sowie dessen Behebung angegeben werden. In einem Informationsfeld 42 kann über eine Texteingabe eine genauere Beschreibung des Fehlers ausgegeben werden beispielsweise die Meldung, dass eine Lichtschranke einen liegenden Behälter bzw. eine Lücke am Maschinenablauf erkannt hat.

Auf Grundlage dieser Zustandsinformation werden aus der Speichereinrichtung 14 bestimmte Messdatensätze entnommen und über die Bildmanipulationseinheit 16 das in dem Hauptfenster 46 gezeigte Bild ausgegeben. Entsprechend wird in dem Hauptfenster 46 diese liegende Flasche animiert (z.B. rot blinkend) dargestellt. Weiterhin kann in dem Informationsfeld 42 dem Benutzer ausgegeben werden, wie die Maschine auf diesen Fehler reagiert hat, beispielsweise dadurch, dass eine Flaschensperre geschlossen wurde und die Maschinengeschwindigkeit reduziert wurde. Weiterhin werden an den Benutzer Informationen ausgegeben, wie der Fehler zu beheben ist (Fehlerbehebung), in diesem Falle die Information, dass die liegende Flasche 48 aufzurichten bzw. die Lücke zu schließen ist. Mit Hilfe der Betätigungsfelder 43a und 43b können längere Fehlermeldungen dargestellt bzw. wiederholt werden.

In dem Hauptfenster 46 ist der jeweilige Betriebszustand der Maschine in Echtzeit dargestellt, wobei dieser Betriebszustand zu den Fehlermeldungen in dem Kommunikationsfenster 41 und dem Informationsfeld 42 korrespondiert.

Zur Fehlerbehebung bzw. Wartungsdurchführung sind die 3D-Modelle mit der realen Steuerung (z.B. Simatic Step 7, Allen Bradley und B&R) gekoppelt. Im Falle einer Störung wird der Ort der Störung im 3D-Modell bzw. der Gesamtmaschinenübersicht angezeigt und bevorzugt wird die fehlerhafte Baugruppe hervorgehoben, beispielsweise durch rotes Blinken. Der Benutzer kann anschließend eine verbesserte Einsicht nehmen, in dem in die Maschine (animiert) hineingezoomt wird. Zu diesem Zweck sind in der Speichereinrichtung jeweils sinnvolle festgelegte Kameraabläufe in Form von Ablaufdaten hinterlegt. Auch diese Funktionalität muss auf dem gegenwärtigen Visualisierungssystem, z.B. dem Touchpanel, hinterlegt werden.

Dabei sind je nach Komplexität und Art der Störungen die einzelnen Maßnahmen zur Störungsbehebung ebenfalls wie beim Produktwechsel animiert visualisiert, wobei der Benutzer diese Visualisierung durch Betätigen einer Funktion innerhalb des Touchpanels anstoßen kann. Die oben genannten Fehlerbehebungsmaßnahmen in Form von 3D-Animationen geben dem Maschinenbediener schnellen Aufschluss über die Behebung der Störung. Dies wird bevorzugt bei einigen besonders produktionsrelevanten Störmeldungen (beispielsweise 10 - 15 Stück) exemplarisch realisiert. Auch diese Funktionalität wird auf dem oben erwähnten Visualisierungssystem realisiert. In gleicher Weise kann auch eine Anzeige erfolgen, falls einzelne Zustandserfassungseinrichtungen 6 (Fig. 1) nicht ordnungsgemäß arbeiten. In diesem Falle kann in dem Kommunikationsfenster 41 die Meldung erscheinen, dass ein bestimmter Sensor, beispielsweise eine Greiferüberwachung, ausgefallen ist. Daneben kann der genaue Ort dieses Sensors angegeben werden. In dem unteren Informationsfeld 42 kann eine genauere Beschreibung des Sensorfehlers erfolgen beispielsweise Information angezeigt werden, dass eine besondere Lichtschranke nicht korrekt arbeitet. Daneben können Konsequenzen ausgegeben werden, beispielsweise die Information, dass die Maschine angehalten wurde. Daneben kann auch eine Empfehlung an den Benutzer ausgegeben werden, wie der Fehler zu beheben ist, beispielsweise die Aufforderung den entsprechenden Sensor zu reinigen.

Diese Vorgehensweise stellt eine erhebliche Verbesserung gegenüber dem Stand der Technik dar, da nunmehr strukturierte Fehlermeldungen ausgegeben werden, welche einerseits die Verständlichkeit fördern und andererseits auch zur Vollständigkeit der Informationen sorgen.

Zusammenfassend kann über die Anzeigeeinrichtung eine virtuelle bzw. vollständig simulierte virtuelle Maschine ausgegeben werden und auch mit geringem Bedarf an Speicherplatz der Verlauf dieser Maschine ausgegeben werden.

Zusammenfassend verwendet die erfindungsgemäße Vorrichtung 1 ein dreidimensionales Modell der kompletten Behandlungseinheit 4 mit allen für einen Benutzer benötigten Details. Dabei nimmt dieses 3D-Modell vergleichsmäßig geringe Dateigrößen in Anspruch z.B. Dateigrößen von weniger als 2MB. Für Produktwechselvorgänge werden Animationen für jeden einzelnen Produktwechselvorgang zur Verfügung gestellt, wobei für den Benutzer aussagefähige Beschreibungen einschließlich benötigter Werkzeuge ausgegeben werden. Daneben sind für den Benutzer auch die einzelnen Animationen wiederholbar.

Im Falle von Störmeldungen werden neben der Störmeldung auch der genaue Störort ausgegeben sowie eine animierte Anleitung zur Fehlerbehebung. Dabei ist auch eine Anzeigesituationsabhängige Kameraperspektive möglich.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zum Behandeln von Behältnissen, mit
einer Behandlungseinheit (4), welche die Behältnisse in einer vorbestimmten Weise behandelt, wobei diese Behandlungseinheit wenigstens eine Zustandserfassungseinrichtung (6) aufweist, die wenigstens einen Betriebszustand der Behandlungseinheit (4) erfasst und die Zustandssignale ausgibt, die für diesen Betriebszustand der Behandlungseinheit (4) charakteristisch sind, und mit
einer Überwachungseinheit (10) zum Steuern oder Bedienen der Behandlungseinheit (4), wobei die Überwachungseinheit (10) eine Speichereinrichtung (14) aufweist, in der Darstellungsdaten für Komponenten (2, 7) der Behandlungseinheit (4) und / oder der Vorrichtung (1) abgelegt sind, **dadurch gekennzeichnet, dass**
die Überwachungseinheit (10) eine Bildmanipulationseinheit (16), die in Reaktion auf ausgegebene Zustandssignale Bildsequenzen auf Grundlage von in der Speichereinrichtung (14) abgelegten Darstellungsdaten bereitstellt, und eine visuelle Anzeigeeinrichtung (12) zur Anzeige der bereitgestellten Bildsequenzen aufweist, und
die Anzeigeeinrichtung (12) derart ausgestaltet ist, dass sie, im Falle eines Fehlers an einer Komponente (2, 7) der Behandlungseinheit (4), als die Bildsequenzen diese Komponente und Schritte anzeigt, die zur Behebung des Fehlers notwendig sind.

2. Vorrichtung nach Anspruch 1, **dadurch gekennzeichnet, dass** die Darstellungsdaten in Form von Vektorgraphiken und / oder Ablaufdaten in der Speichereinrichtung (14) abgelegt sind.

3. Vorrichtung (1) nach wenigstens einem der vorangegangenen Ansprüche, **dadurch gekennzeichnet, dass** in der Speichereinrichtung (14) Bilder der Komponenten (2,7) und / oder der Vorrichtung (1) in vereinfachter Form abgelegt sind.

4. Vorrichtung (1) nach wenigstens einem der vorangegangenen Ansprüche, **dadurch gekennzeichnet, dass** mit Hilfe der Bildmanipulationseinrichtung (16) Bildsequenzen aus den in der Speichereinrichtung (14) abgelegten Darstellungsdaten erzeugbar sind.

5. Vorrichtung (1) nach wenigstens einem der vorangegangenen Ansprüche, **dadurch gekennzeichnet, dass** eine Vielzahl von Zustandserfassungseinrichtungen (6) vorgesehen ist.

6. Vorrichtung (1) nach wenigstens einem der vorangegangenen Ansprüche, **dadurch gekennzeichnet, dass** die Betriebszustände aus einer Gruppe von Betriebszuständen ausgewählt sind, welche Störungszustände, Produktwechselzustände, Störungszustände der Zustandserfassungseinrichtungen (6), Istzustände, Betriebszeiten, Wartungszustände, Produktionszahlen und dergleichen enthält.

7. Überwachungseinheit (10)zum Steuern und / oder Bedienen einer Vorrichtung (1) nach wenigstens einem der vorangegangenen Ansprüche, wobei die Überwachungseinheit (10) eine Speichereinrichtung (14) aufweist, in der Darstellungsdaten für Komponenten (2, 7) einer Behandlungseinheit (4) und / oder der Vorrichtung (1) abgelegt sind, **dadurch gekennzeichnet, dass** die Überwachungseinheit (10) eine Bildmanipulationseinheit (16), die auf Grundlage von in der Speichereinrichtung (14) abgelegten Darstellungsdaten Bildsequenzen erzeugt, und eine visuelle Anzeigeeinrichtung (12) zur Anzeige der bereitgestellten Bildsequenzen aufweist, und
die Anzeigeeinrichtung (12) derart ausgestaltet ist, dass sie, im Falle eines Fehlers an einer Komponente (2, 7) der Behandlungseinheit (4), als die Bildsequenzen diese Komponente und Schritte anzeigt, die zur Behebung des Fehlers notwendig sind.

8. Überwachungseinheit (10) nach Anspruch 7, **dadurch gekennzeichnet, dass** die Anzeigeeinrichtung (12) zur Anzeige der Bildsequenzen auf Grundlage eines Istzustands der Vorrichtung (1) ausgestaltet ist.

9. Verfahren zum Betreiben einer Vorrichtung (1) zum Behandeln von Behältnissen mit den Schritten:
- Ausgabe eines charakteristischen Signals an eine Überwachungseinrichtung (10) der Vorrichtung (1) ;
- Auswahl eines vorgegebenen Darstellungsdatensatzes aus einer Vielzahl von in einer Speichereinrichtung (14) abgelegten Darstellungsdatensätzen, wobei die Darstellungsdaten für wenigstens eine Komponente (2,7) und / oder die Vorrichtung (1) charakteristisch sind und die Auswahl in Reaktion auf das charakteristische Signal erfolgt;
- Ausgabe einer Bildsequenz in Reaktion auf das charakteristische Signal und auf Grundlage des ausgewählten Darstellungsdatensatzes, wobei, im Falle eines Fehlers an einer Komponente (2, 7) einer Behandlungseinheit (4) der Vorrichtung (1), als die Bildsequenz diese Komponente und Schritte angezeigt werden, die zur Behebung des Fehlers notwendig sind.

10. Verfahren nach Anspruch 9, **dadurch gekennzeichnet, dass** das charakteristische Signal ein für einen Betriebszustand der Vorrichtung (1) charakteristisches Signal ist.

11. Verfahren nach- Anspruch 9 oder 10, **dadurch gekennzeichnet, dass** die Bildsequenz in einer 3D - Darstellung ausgegeben wird.

12. Verfahren nach wenigstens einem der Ansprüche 9 -11, **dadurch gekennzeichnet, dass** an einen Benutzer Anweisungen zur Erreichung eines Sollzustands der Vorrichtung in Form von Bildsequenzen ausgegeben werden.

13. Verfahren nach wenigstens einem der Ansprüche 9 - 12, **dadurch gekennzeichnet, dass** die Anweisungen auf Grundlage eines Ist - Zustands der Vorrichtung (1) ausgegeben werden.

14. Verfahren nach Anspruch 13, **dadurch gekennzeichnet, dass** bereits ausgeführte Anweisungen abgespeichert werden.

## Claims

1. A device (1) for treating containers, comprising a treatment unit (4) treating the containers in a predetermined manner, this treatment unit including at least one condition detection unit (6) which detects at least one operating condition of the treatment unit (4) and sends out condition signals which are characteristic for this operating condition of the treatment unit (4), and including a monitoring unit (10) for controlling or operating the treatment unit (4), the monitoring unit (10) including a storage device (14) in which presentation data for components (2, 7) of the treatment unit (4) and/or of the device (1) are deposited, **characterised in that** the monitoring unit (10) includes an image treatment unit (16) which as a response to emitted condition signals provides image sequences on the basis of presentation data deposited in the storage device (14), and a visual display device (12) for displaying the provided image sequences and that the visual display device (12) is developed such that it displays in case of an error at a component (2, 7) of the treatment unit (4) as the image sequences this component and steps which are necessary to eliminate the error.

2. The device as claimed in Claim 1, **characterised in that** the presentation data is deposited on the storage device (14) in the form of vector graphics and/or of flow data.

3. The device (1) as claimed in at least one of the preceding claims, **characterised in that** images of the components (2, 7) and/or of the device (1) are deposited on the storage device (14) in a simplified form.

4. The device (1) as claimed in at least one of the preceding claims, **characterised in that** by means of the image treatment device (16), image sequences may be generated from the presentation data deposited on the storage device (14).

5. The device (1) as claimed in at least one of the preceding claims, **characterised in that** a plurality of condition detection devices (6) is provided.

6. The device (1) as claimed in at least one of the preceding claims, **characterised in that** the operating conditions are selected from a group of operating conditions including fault conditions, product change conditions, fault conditions of the condition detection devices (6), actual conditions, operating times, maintenance conditions, production figures and the like.

7. A monitoring unit (10), for controlling and/or operating a device (1) as claimed in at least one of the preceding claims, the monitoring device (10) including a storage device (14), in which presentation data for components (2, 7) of a treatment unit (4) and/or the device (1) are deposited, **characterised in that** the monitoring unit (10) includes an image treatment unit (16) which generates image sequences on the basis of presentation data deposited in the storage device (14), and a visual display device (12) for displaying the provided image sequences and that the visual display device (12) is developed such that it displays in case of an error at a component (2, 7) of the treatment unit (4) as the image sequences this
component and steps which are necessary to eliminate the error.

8. The monitoring unit (10) as claimed in Claim 7, **characterised in that** the visual display device (12) is developed such as to display the image sequences on the basis of an actual condition of the device (1).

9. A method for operating a device (1) for treating containers, including the following steps:
- sending out a characteristic signal to a monitoring unit (10) of the device (1);
- selecting a given presentation data set from a plurality of presentation data sets deposited in a storage device (14), the presentation data being characteristic for at least one component (2, 7) and/or the device (1) and the selection being carried out as a response to the characteristic signal;
- outputting an image sequence as a response to the characteristic signal and on the basis of the selected presentation data set, wherein in case of an error at a component (2, 7) of a treatment device (4) of the device (1) as the image sequences this component and steps are displayed which are necessary to eliminate the error.

10. The method as claimed in claim 9, **characterised in that** the characteristic signal is characteristic for a condition of the device (1).

11. The method as claimed in Claim 9 or 10, **characterised in that** the image sequence is output in a 3-D presentation.

12. The method as claimed in at least one of the Claims 9-11, **characterised in that** instructions for reaching a required condition of the device are output to a user in the form of image sequences.

13. The method as claimed in at least one of the Claims 9-12, **characterised in that** the instructions are output on the basis of an actual condition of the device (1) .

14. The method as claimed in Claim 13, **characterised in that** any instructions already carried out are saved.

## Revendications

1. Dispositif (1) de traitement de contenants, avec
une unité de traitement (4) qui traite les contenants d'une manière définie, ladite unité de traitement comportant au moins une unité de détection d'états (6) qui détecte au moins un état de fonctionnement de l'unité de traitement (4) et émet les signaux d'état caractéristiques pour cet état de fonctionnement de l'unité de traitement (4), et avec
une unité de surveillance (10) pour la conduite ou la commande de l'unité de traitement (4), ladite unité de surveillance (10) comportant une unité de mémorisation (14) où sont stockées des données de représentation pour des composants (2, 7) de l'unité de traitement (4) et / ou du dispositif (1), **caractérisé**
**en ce que** l'unité de surveillance (10) comporte une unité de manipulation d'images (16), qui, en réaction aux signaux d'état émis, délivre des séquences d'images sur la base des données de représentation stockées dans l'unité de mémorisation (14), et une unité d'affichage visuel (12) pour l'affichage des séquences d'images délivrées, et
**en ce que**, dans le cas d'une erreur sur un composant (2, 7) de l'unité de traitement (4), l'unité d'affichage (12) est conçu pour afficher les séquences d'images de ce composant et les étapes exigées pour supprimer l'erreur.

2. Dispositif selon la revendication 1, **caractérisé en ce que** les données de représentation sont stockées sous la forme de graphiques vectoriels et / ou de données d'organigramme dans l'unité de mémorisation (14).

3. Dispositif (1) selon au moins une des revendications précédentes, **caractérisé en ce que** des images des composants (2,7) et / ou du dispositif (1) sont archivées sous forme simplifiée dans l'unité de mémorisation (14).

4. Dispositif (1) selon au moins une des revendications précédentes, **caractérisé en ce qu'**au moyen de l'unité de manipulation d'images (16), des séquences d'images peuvent être générées à partir des données de représentation stockées dans l'unité de mémorisation (14).

5. Dispositif (1) selon au moins une des revendications précédentes, **caractérisé en ce qu'**une pluralité d'unités de détection d'états (6) est prévue.

6. Dispositif (1) selon au moins une des revendications précédentes, **caractérisé en ce que** les états de fonctionnement sont sélectionnés dans un groupe d'états de fonctionnement qui comprend des états de perturbation, des états de changement de produit, des états de perturbation des unités de détection d'états (6), des états effectifs, des temps de fonctionnement, des états d'entretien, des chiffres de production et similaires.

7. Unité de surveillance (10) pour la commande et / ou la conduite d'un dispositif (1) selon au moins une des revendications précédentes, ladite unité de surveillance (10) comportant une unité de mémorisation (14) où sont stockées des données de représentation pour des composants (2, 7) d'une unité de traitement (4) et / ou du dispositif (1), **caractérisée en ce que** ladite unité de surveillance (10) comporte une unité de manipulation d'images (16), qui génère des séquences d'images sur la base des données de représentation stockées dans l'unité de mémorisation (14), et une unité d'affichage visuel (12) pour l'affichage des séquences d'images délivrées, et
**en ce que**, dans le cas d'une erreur sur un composant (2, 7) de l'unité de traitement (4), l'unité d'affichage (12) est conçu pour afficher les séquences d'images de ce composant et les étapes exigées pour supprimer l'erreur.

8. Unité de surveillance (10) selon la revendication 7, **caractérisée en ce que** l'unité d'affichage (12) est réalisé pour l'affichage des séquences d'images sur la base d'un état effectif du dispositif (1).

9. Procédé de mise en oeuvre d'un dispositif (1) de traitement de contenants, comprenant les étapes suivantes :
- émission d'un signal caractéristique vers une unité de surveillance (10) du dispositif (1) ;
- sélection d'un article de données de représentation parmi une pluralité d'articles de données de représentation stockés dans une unité de mémorisation (14), les données de représentation étant caractéristiques pour au moins un composant (2,7) et / ou le dispositif (1), et la sélection étant effectuée en réaction au signal caractéristique ;
- émission d'une séquence d'images en réaction au signal caractéristique et sur la base de l'article de données de représentation sélectionné, les séquences d'images d'un composant (2, 7) d'une unité de traitement (4) du dispositif (1) et les étapes exigées pour supprimer l'erreur étant affichées dans le cas d'une erreur sur ledit composant.

10. Procédé selon la revendication 9, **caractérisé en ce que** le signal caractéristique est un signal caractéristique pour un état de fonctionnement du dispositif (1).

11. Procédé selon la revendication 9 ou la revendication 10, **caractérisé en ce que** la séquence d'images est émise avec une représentation tridimensionnelle.

12. Procédé selon au moins une des revendications 9 à 11, **caractérisé en ce que** des instructions pour obtenir un état de consigne du dispositif sont adressées à un utilisateur sous la forme de séquences d'images.

13. Procédé selon au moins une des revendications 9 à 12, **caractérisé en ce que** les instructions sont émises sur la base d'un état effectif du dispositif (1).

14. Procédé selon la revendication 13, **caractérisé en ce que** les instructions déjà exécutées sont mémorisées.
